# EUROPÄISCHE PATENTSCHRIFT

(11) **EP 1 942 223 B1**
(45) Veröffentlichungstag und Bekanntmachung des Hinweises auf die Patenterteilung: **18.04.2012**
(21) Anmeldenummer: 08006724.2
(22) Anmeldetag: 02.04.2008
(51) Int. Cl.: D06F 95/00, D06F 93/00, D06F 67/04, B25J 11/00

(54) **Haushaltgerät zum Manipulieren von Wäsche**
Household device for manipulating laundry
Appareil ménager destiné à la manipulation de linge

(43) Veröffentlichungstag der Anmeldung: 09.07.2008
(73) Patentinhaber: V-Zug AG, 6301 Zug (CH)
(72) Erfinder: Werner, Jürg, 8908 Hedingen (CH)
(74) Vertreter: Sutter, Kurt

(56) Entgegenhaltungen:
- WO-A-97/10376
- WO-A-2006/028326
- DE-A1- 10 028 979
- DE-A1- 10 035 734
- US-A1- 2001 049 846
- US-A1- 2006 130 243
- US-A1- 2007 266 588

## Beschreibung

Die Erfindung betrifft ein Haushaltgerät zum Manipulieren von Wäsche gemäss Oberbegriff von Anspruch 1.

Die Wäschepflege ist einer der arbeitsintensivsten Bereiche der modernen Haushaltführung. Dem Hausmann bzw. der Hausfrau werden verschiedene Geräte, wie z.B. Waschmaschinen, Bügeleisen, Wäschetrockner und dergleichen zur Verfügung gestellt, um diese Arbeit zu erleichtern. Dennoch muss viel Zeit zur Wäschepflege aufgewendet werden. Zudem kommt es immer wieder zu Fehlmanipulationen, aufgrund derer z.B. Wäsche falsch gewaschen oder falsch gebügelt wird, was zu Schäden an der Wäsche führen kann.

US 2006/0130243 beschreibt ein Haushaltgerät mit einem Manipulator, mit welchem Wäsche vereinzelt und einem Durchlaufreiniger zugeführt werden kann.

Es stellt sich deshalb die Aufgabe, ein Haushaltgerät bereitzustellen, welches in apparativ einfacher Weise die Wäschepflege erleichtert.

Diese Aufgabe wird vom Haushaltgerät gemäss Anspruch 1 erfüllt. Demgemäss wird ein Gerät bereitgestellt, welches einen Manipulator aufweist, der dazu ausgestaltet ist, Wäschestücke einer Waschmaschine und einem Wäschetrockner zuzuführen und aus der Waschmaschine und dem Wäschetrockner zu entnehmen. Zudem ist ein Lesegerät vorgesehen, mit welchem an den Wäschestücken angeordnete, elektronische Etiketten drahtlos ausgelesen werden können.

Zudem übernimmt das Haushaltgerät das Umfüllen zwischen Waschmaschine und Wäschetrockner und die Türen dieser Geräte können vom Haushaltgerät automatisch geöffnet und geschlossen werden.

Ein solches Gerät bietet eine Grundlage für eine Vielzahl von Vereinfachungen bei der Behandlung von Wäsche. Insbesondere kann das Gerät dazu ausgestaltet sein, Wäsche aufgrund der ausgelesenen Informationen zu vereinzeln, auszuwählen, zu erkennen, zu orientieren, mit den richtigen Parametern zu waschen, zu trocknen, zusammenzulegen, nach Besitzer zu ordnen und bündeln und/oder in anderer Weise zu behandeln.

Bei den elektronischen Etiketten handelt es sich vorzugsweise um sogenannte RF-ID-Tags. Dies sind Bausteine, welche in der Lage sind, Radiowellen zu empfangen und aufgrund von in einem Chip abgelegten Informationen in modulierter Weise zurückzusenden, so dass der ursprüngliche Absender der Radiowellen die von der Etikette zurück gesandten Wellen auffangen und daraus die Informationen demodulieren kann. Auf diese Weise kann die im Chip abgelegte Information drahtlos und auf gewisse Entfernung ausgelesen werden.

Das Merkmal, wonach das Gerät einen Manipulator aufweist, der dazu ausgestaltet ist, Wäschestücke einer Waschmaschine oder einem Wäschetrockner zuzuführen und/oder aus der Waschmaschine oder dem Wäschetrockner zu entnehmen, ist so zu verstehen, dass einerseits der Manipulator mechanisch so aufgebaut und angetrieben ist, dass er diese Manipulationen durchführen kann, und darüber hinaus so, dass eine Steuerung vorgesehen ist, die dazu programmiert ist, den Manipulator zur Durchführung dieser Manipulationen zu steuern. Die Steuerung kann im Manipulator selbst angeordnet oder als Teil der Steuerung des Haushaltgeräts ausgestaltet sein.

In einer bevorzugten Ausführung kann das Gerät dazu ausgestaltet sein, Wäsche zu vereinzeln, indem es mit dem Manipulator Wäsche ergreift und die Zahl der in der ergriffenen Wäsche vorhandenen Etiketten bestimmt. Ist diese Zahl beispielsweise grösser als eins, so kann die ergriffene Wäsche zurückgelegt und ein neuer Versuch gestartet werden.

Das Haushaltgerät kann weiter dazu ausgestaltet sein, die Waschmaschine und/oder den Wäschetrockner aufgrund von aus den Etiketten ausgelesenen Informationen zu programmieren.

Die Erfindung bezieht sich auch auf die Kombination eines Haushaltgeräts der oben erwähnten Art und einen Satz drahtlos vom Haushaltgerät auslesbarer Etiketten. Mit dieser Kombination lässt sich die Wäsche eines Haushalts erfassen und effizient behandeln. Insbesondere können in den Etiketten oder im Haushaltgerät Informationen abgespeichert werden, welche für jedes Wäschestück spezifische Angaben machen, z.B. betreffend der Art, wie das Wäschestück zu behandeln ist oder betreffend des Typs des Wäschestücks, dessen Geometrie und dessen Besitzers (z.B. Kennzeichnung des Familienmitglieds).

Weitere bevorzugte Ausführungen und Anwendungen des vorliegenden Systems sind in den abhängigen Ansprüchen sowie in der nun folgenden Beschreibung und den Figuren beschrieben bzw. dargestellt. Dabei zeigen:
Fig. 1 eine Ansicht einer Ausführung des Haushaltgeräts und
Fig. 2 ein Blockdiagramm der wichtigsten Komponenten der Ausführung.

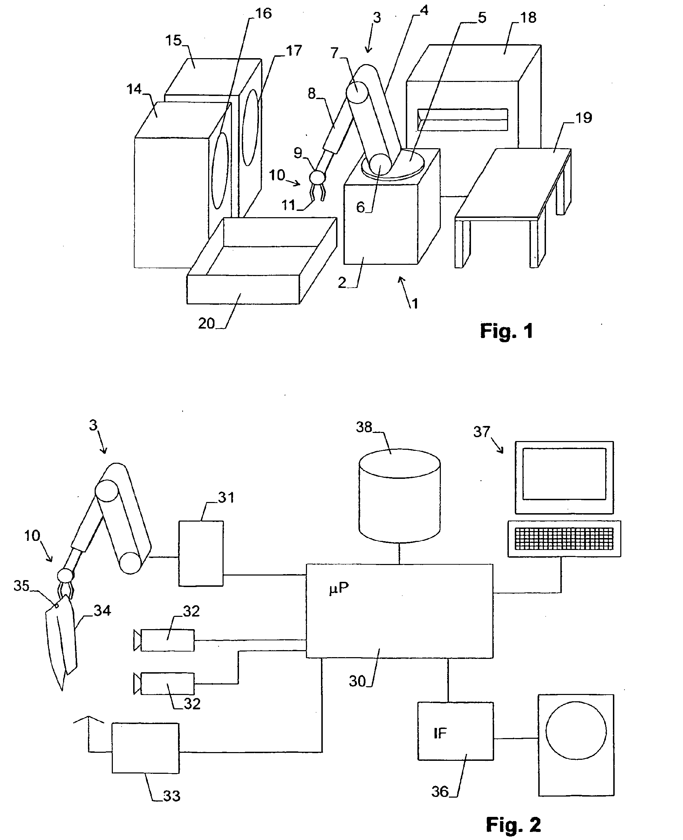

In Fig. 1 wird eine Ausführung eines erfindungsgemässen Haushaltgeräts 1 zusammen mit weiteren Geräten dargestellt. Dabei handelt es sich um eine von vielen möglichen Ausführungsvarianten eines solchen Geräts.

Das Haushaltgerät 1 nach Fig. 1 besitzt im gezeigten Beispiel ein Gehäuse 2, in welchem z.B. Steuerung, Motoren und weitere Komponenten angeordnet sind, sowie einen Manipulator 3. Der dargestellte Manipulator 3 ist als Roboterarm ausgestaltet und besitzt z.B. einen ersten Abschnitt 4 der über einen Drehteller 5 mit dem Gehäuse 2 verbunden ist, wobei der Drehteller 5 um eine vertikale Achse drehbar ist. Der erste Abschnitt 4 ist gegenüber dem Drehteller 5 in einem ersten Gelenk 6 um eine horizontale Achse schwenkbar. Am gegenüber liegenden Ende des ersten Abschnitts 4 ist ein zweites Gelenk 7 vorgesehen, an welchem ein zweiter Abschnitt 8 um eine weitere horizontale Achse schwenkbar angeordnet ist. Der zweite Abschnitt 8 ist z.B. als Teleskop ausgestaltet und kann ausgefahren werden. Am Ende des zweiten Abschnitts 8 ist ein zweiachsiges Drehgelenk 9 vorgesehen, an welchem eine Greifvorrichtung 10 befestigt ist. Die Greifvorrichtung 10 besitzt gegeneinander schwenkbare Finger 11 zum Ergreifen von Wäschestücken.

Die Anordnung gemäss Fig. 1 zeigt weiter eine Waschmaschine 14 und einen Wäschetrockner 15, welche über Türen 16 bzw. 17 beladen und entladen werden können. Diese beiden Geräte sind so angeordnet, dass sie der Manipulator 3 erreichen kann und mit der Greifvorrichtung 10 Wäschestücke in die Geräte einbringen oder aus diesen entnehmen können. Weiter ist das Haushaltgerät 1 in der Lage, die Türen 16 und 17 zu öffnen und zu schliessen, entweder mittels Manipulation durch die Greifvorrichtung 10, oder direkt über ein elektrisches Interface, über welches das Haushaltgerät 1 mit der Waschmaschine 14 bzw. dem Wäschetrockner 15 verbunden ist.

Im dargestellten Beispiel sind zudem, ebenfalls in Reichweite des Manipulators 10, eine Bügelmaschine 18 angeordnet, z.B. eine Walzenbügelmaschine, sowie ein Ablagetisch 19.

Schliesslich besitzt das System eine Zuführstelle 20, z.B. in Form eines Ablagekorbs, der zum Ablegen von zu waschender Wäsche dient. Auch die Zuführstelle 20 befindet sich in Reichweite des Manipulators 3, so dass dieser darin liegende Wäschestücke aufnehmen kann.

Weitere wichtige Komponenten des Systems können dem Blockschaltbild gemäss Fig. 2 entnommen werden. Wie daraus ersichtlich, ist das Haushaltgerät mit einer Steuerung 30 ausgestattet, welche dessen Funktionen steuert. Die Steuerung 30 ist z.B. als Mikroprozessor ausgestaltet, welcher zur Durchführung der hier beschriebenen Operationen programmiert ist.

Die Steuerung 30 steuert über einen Treiber 31 den Manipulator 3 und ist in der Lage, mit der Greifvorrichtung 10 Wäschestücke an den Geräten 14, 15, 18, am Tisch 19 und an der Zufuhrstelle 20 auf- und/oder abzulegen.

Weiter ist die Steuerung 30 mit mindestens einer Kamera 32 verbunden und mit Bildverarbeitungssoftware ausgestattet. Vorzugsweise sind zwei Kameras 32 vorgesehen, um stereographische Aufnahmen zu ermöglichen. Die Kameras können z.B. am Gehäuse 2 und/oder an der Greifvorrichtung 10 angeordnet sein. Sie erlauben es, den Ort eines Wäschestücks zu identifizieren und die weiter unten beschriebenen Arbeiten durchzuführen.

Ein mit der Steuerung 30 verbundener Sender/Empfänger 33 erlaubt es, die elektronischen Etiketten an den Wäschestücken auszulesen. Als Beispiel ist in Fig. 2 ein Wäschestück 34 in Form einer Hose dargestellt, welche am Bund eine elektronische Etikette 35 trägt. Vorzugsweise ist der Sender/Empfänger 33 nicht nur als reines Lesegerät, sondern als Schreib- und Lesegerät ausgestaltet, mit welchem Informationen nicht nur aus den Etiketten 35 auslesbar, sondern auch in diese einschreibbar sind.

Der Sender/Empfänger 33 ist vorzugsweise so ausgestaltet, dass er auch eine zumindest ungefähre Ortung der Etiketten durchführen kann, z.B. durch Triangulation, Signallaufzeit-Messung und/oder Feldstärkenmessung. Entsprechende Verfahren sind dem Fachmann bekannt.

Der Sender/Empfänger 33 kann beispielsweise am Gehäuse 1 oder am Manipulator 3 angebracht sein. Es können auch mehrere Sender/Empfänger 33 vorgesehen sein, z.B. einer an der Zuführstelle 20 und einer am Manipulator 3 oder am Tisch 19.

Weiter ist die Steuerung 30 vorzugsweise über eine Interfaceschaltung 36 mit den übrigen Haushaltgeräten 14, 15, 18 verbunden und in der Lage, diese zu steuern.

In einer weiteren bevorzugten Ausführung ist an der Steuerung 30 eine Ein-/Ausgabeeinheit 37, vorzugsweise mit Tastatur und Bildschirm, vorgesehen, welche es dem Benutzer erlaubt, das Gerät zu steuern, Befehle einzugeben, Statusmeldungen abzufragen oder Daten einzugeben und/oder zu verändern. Die Ein-/Ausgabeeinheit 37 kann direkt am Gerät 1 angeschlossen sein, oder von einem entfernten Computer gebildet werden, der über ein Netzwerk mit dem Gerät 1 verbunden ist.

Schliesslich ist vorzugsweise eine Datenbank 38 vorgesehen, in welcher z.B. sämtliche vom System erfassten Wäschestücke verzeichnet sind.

Im Folgenden werden beispielhaft einige Verwendungs- und Betriebsmöglichkeiten des soweit beschriebenen Systems dargestellt.

Zusammen mit dem beschriebenen Gerät 1 erhält der Benutzer einen Satz von drahtlos auslesbaren Etiketten 35. Die Etiketten 35 sind so ausgestaltet, dass sie in einfacher Weise an jeglichen Wäschestücken permanent befestigt werden können, z.B. durch Nähen, Kleben oder Klemmen. Die elektronischen Etiketten 35 können die in den Wäschestücken bereits vorhandenen Stoffetiketten (welche beispielsweise Waschanweisungen enthalten) ersetzen oder zusätzlich zu diesen angebracht werden.

Indem der Benutzer zum System passende Etiketten an den Wäschestücken anbringen kann, wird es möglich, beliebige Wäschestücke, unabhängig vom Hersteller, in das System aufzunehmen.

Wird ein Wäschestück mit einer elektronischen Etikette versehen, wird es vorzugsweise auch sofort im System erfasst. Hierzu wird z.B. die Etikette ausgelesen und mit einem Befehl in der Ein-/Ausgabeeinheit 37 in die Datenbank 38 aufgenommen. Gleichzeitig werden in das System weitere Parameter zum Wäschestück eingegeben, welche ebenfalls in der Datenbank 38 und/oder, bei Verwendung von beschreibbaren elektronischen Etiketten, auch auf der Etikette selbst abgespeichert werden. Die Daten, die zu einem Wäschestück aufgenommen werden können, sind z.B. eine oder mehrere der Folgenden:
a) Waschtemperatur: gibt an, wie heiss das Wäschestück gewaschen werden soll;
b) Trocknungsbedingungen: gibt an, wie das Wäschestück getrocknet werden soll, z.B. durch Aufhängen oder im Wäschetrockner;
c) Trocknungstemperatur: gibt an, bei welcher Temperatur die Trocknung im Wäschetrockner gegebenenfalls durchzuführen ist;
d) Schwingparameter: gibt an, ob das Wäschestück am Schluss eines Waschvorgangs "geschwungen", d.h. bei hoher Trommeldrehzahl dehydriert, werden soll, und gegebenenfalls bei welcher Drehzahl dies stattfinden sollte;
e) Bügelparameter: gibt an, ob und gegebenenfalls wie das Wäschestück nach den Waschen und (mindestens teilweisen) Trocknen automatisch gebügelt werden soll;
f) Zusammenlegparameter: Gibt an, ob und gegebenenfalls wie das Wäschestück nach dem Waschen vom Gerät 1 zusammengelegt werden soll;
g) Art des Wäschestücks: Gibt an, um was für eine Art Wäschestück es sich handelt, z.B. Hose, Unterhose, Hemd, Handtuch, etc; Weiter kann dieser Parameter auch angeben, wie gross das jeweilige Wäschestück ist. Dieser Parameter legt u.a. also fest, was für eine Geometrie ein Wäschestück hat;
h) Ort der Anordnung der Etikette: Für die optische Erfassung und die Manipulation des Wäschestücks ist es von Vorteil, wenn das Gerät 1 weiss, wo am Wäschestück die Etikette angebracht ist, siehe unten;
i) Besitzer des Wäschestücks: Diese Information erlaubt z.B. ein gezieltes automatisches Sortieren der Wäschestücke nach dem Waschen und Trocknen;
j) Alter des Wäschestücks, Geschichte des Wäschestücks: Dieser Parameter gibt z.B. an, wann ein Wäschestück erfasst worden ist und/oder wie oft es bereits gewaschen worden ist;
k) Identifikation des Wäschestücks: Hierbei handelt es sich um ein eindeutiges Identifizierungsmittel, mit dem jedes einzelne Wäschestück individuell identifiziert und z.B. einem Datensatz in Datenbank 38 zugeordnet werden kann; Beispielsweise kann in jeder Etiketten eine Zahl abgespeichert sein, wobei jede Zahl nur einmal vorkommt - diese Zahl kann sodann zur eindeutigen Identifikation des Wäschestücks verwendet werden;
l) Status des Wäschestücks: Hierbei handelt es sich um eine Angabe, welche es erlaubt festzustellen, in welchem Zustand sich ein Wäschestück befindet, beispielsweise "wartet an der Zuführstelle 20 auf Reinigung", "befindet sich in Waschmaschine", "wird derzeit getrocknet", "wartet auf Tisch 19 zum Abtransport", "wurde gereinigt und abtransportiert".

Informationen der unter a) bis f) genannten Art können generell als Behandlungsparameter bezeichnet werden, welche für ein Wäschestück angeben, wie es zu behandeln ist.

Gewisse Informationen werden vom Gerät 1 automatisch nachgeführt, so z.B. Parameter j).

Die Informationen können, wie erwähnt, in Datenbank 38 gespeichert sein. In diesem Fall braucht in Etikette 35 lediglich die Identifikation des Wäschestücks 34 abgespeichert zu sein, aufgrund derer der zugehörige Datenbankeintrag aufgerufen werden kann. Zusätzlich oder alternativ hierzu kann, bei Verwendung beschreibbarer Etiketten 35, mindestens ein Teil der Informationen auch auf den jeweiligen Etiketten abgespeichert werden.

Ist ein Wäschestück einmal erfasst, so kann es vom Benutzer z.B. zum Waschen an der Zuführstelle 20 abgelegt werden. Das Gerät 1 überwacht die Zuführstelle 20, z.B. indem es mittels Sender/Emfpänger 33 die Zahl und vorzugsweise auch den Inhalt der sich in der Zuführstelle 20 befindlichen Etiketten ermittelt. So weiss das Gerät, wie viele und gegebenenfalls welche Wäschestücke auf eine Wäsche warten.

Wann das Gerät einen Waschvorgang einleitet, hängt von der Art und Zahl der Wäschestücke an der Zuführstelle 20 sowie den vom Benutzer über Ein-/Ausgabe 37 eingegebenen Befehlen ab:
- In einem automatischen Betrieb kann das Gerät 1 z.B. abwarten, bis ausreichend Wäschestücke für eine gegebene Waschart an der Zuführstelle 20 vorhanden sind. Sodann werden die entsprechenden Wäschestücke in die Waschmaschine 14 geladen und es wird ein Waschvorgang eingeleitet.
- Der Benutzer kann den automatischen Betrieb deaktivieren, indem er spezielle Befehle eingibt. Beispielsweise kann er dem Gerät 1 explizit befehlen, dass ein gewisses Wäschestück unverzüglich gewaschen werden soll. In diesem Fall ermittelt das Gerät 1 die für das Wäschestück geeignete Waschart und ggf. auch noch die weiteren Wäschestücke an der Zuführstelle 20, welche in gleicher Art gewaschen werden können. Sodann werden die entsprechenden Wäschestücke vom Gerät 1 in die Waschmaschine 14 geladen und es wird ein Waschvorgang eingeleitet.
- Da in Datenbank 38 vorzugsweise sämtliche Wäschestücke jedes Haushaltsmitglieds erfasst sind und u.a. auch der Status eines Wäschestücks abgespeichert wird, kann Gerät 1 abschätzen, wie viele saubere Wäschestücke jeder Art das jeweilige Haushaltsmitglied noch zur Verfügung hat. Wird festgestellt, dass der Vorrat an Wäschestücken einer gewissen Art zur Neige geht indem er eine vorgegebene Schwelle unterschreitet, so kann das Gerät 1 prüfen, ob sich Wäschestücke dieser Art und dieses Mitglieds an der Zuführstelle 20 befinden. In diesem Fall kann ein Waschvorgang auch frühzeitig (d.h. ohne dass ausreichend Wäsche für eine ganze Trommelladung vorhanden ist) eingeleitet werden, um sicherzustellen, dass jedes Mitglied immer eine ausreichende Zahl sauberer Wäschestücke jeder benötigten Art zur Verfügung hat.

Grundsätzlich kann Gerät 1 also z.B. aufgrund der Angaben aus der Datenbank 38 sowie aufgrund der Erkennung von Wäschestücken an der Zuführstelle 20 entscheiden, welche Wäsche als Nächste zu waschen ist und/oder wann ein Waschvorgang eingeleitet werden soll. Die ausgelesenen Etiketten und/oder explizite Instruktionen des Benutzers erlauben es zudem festzulegen, mit welchen Waschparametern die Waschmaschine zu betreiben ist.

Vorzugsweise ist Gerät 1 so ausgestaltet, dass es alle Etiketten der Wäsche in der Zuführstelle 20 ausliest. Dies erlaubt es einerseits festzustellen, wann ausreichend Wäsche für eine bestimmte Waschart vorhanden ist, und ausserdem kann der Status der Wäschestücke vollständiger und frühzeitig erfasst werden.

Ist ein Waschvorgang einzuleiten, entnimmt Gerät 1 der Zuführstelle 20 diejenigen Wäschestücke, die gewaschen werden sollen, und lädt diese in die Trommel der Waschmaschine 14. Dies kann z.B. wie folgt vor sich gehen:
1) Gerät 1 ortet ein Wäschestück in der Zuführstelle 20. Dies kann z.B. mittels optischer Bilderkennung über die Kameras 32 und/oder mit Hilfe einer Ortung der Etiketten über den Sender/Empfänger 33 in der oben beschriebenen Weise erfolgen.
2) Gerät 1 steuert den Manipulator 3 so, dass die Greifvorrichtung 10 das geortete Wäschestück an seiner vermuteten Position ergreift und hochhebt. Mit den Kameras 32 und/oder mit Hilfe einer Ortung der hochgehobenen Etiketten über den Sender/Empfänger 33 sind in diesem Fall die folgenden Situationen unterscheidbar:
   2a) Es wurde keine Etikette hochgehoben, d.h. Schritt 2 war nicht erfolgreich. In diesem Fall wird bei Schritt 1) weitergefahren.
   2b) Es wurde genau eine Etikette hochgehoben, und diese zeigt an, dass das Wäschestück mit den vorgesehenen Waschparametern gewaschen werden soll, oder es wurde mehr als eine Etikette hochgehoben und alle Etiketten zeigen an, dass die Wäschestücke mit den vorgesehenen Waschparametern gewaschen werden sollen. In diesem Fall wird mit Schritt 3) weitergefahren.
   2c) Es wurde mindestens eine Etikette hochgehoben, welche anzeigt, dass ein Waschen nicht mit den vorgesehen Waschparametern möglich ist. In diesem Fall wird die hochgenommene Wäsche zurückgelegt, eventuell in ein separates Fach der Zuführung 20, und es wird mit Schritt 1) weitergefahren.
3) Das aufgenommene Wäschestück bzw. die aufgenommenen Wäschestücke wird/werden in die Waschmaschine 14 gelegt.
4) Schritte 1) bis 3) werden wiederholt, bis die Trommel der Waschmaschine 14 voll ist oder kein Wäschestück für die vorgesehene Waschart mehr vorgesehen ist.

Nun wird die Waschmaschine 14 über Interface 36 auf die vorgesehen Waschart eingestellt und reinigt die Wäschestücke.

Nach Abschluss des Waschvorgangs entnimmt Gerät 1 die Wäsche aus der Waschmaschine und füllt diese z.B. in den Wäschetrockner 15 um, ggf. über eine Zwischenlagerstelle. Auch hier wird, ähnlich wie beim Einfüllen der Waschmaschine, sichergestellt, dass nur Wäschestücke in den Wäschetrockner 15 gefüllt werden, die für die vorgesehene Trocknung geeignet sind. Wäschestücke, welche nicht im Wäschetrockner 15 getrocknet werden sollen, können z.B. ausgesondert werden, um dann manuell oder automatisch zum Trocknen aufgehängt zu werden.

Nach dem Trocknen bestimmt Gerät 1 wiederum für jedes Wäschestück, wie die Behandlung weitergehen soll. Wäschestücke, die automatisch gebügelt werden sollen, werden vereinzelt und orientiert (siehe unten), um sodann der Bügelmaschine 18 zugeführt zu werden. Wäschestücke, die (vor oder nach dem Bügeln) automatisch zusammenzulegen sind, werden zusammengelegt (siehe unten).

Die fertigen Wäschestücke werden vom Manipulator 3 z.B. auf dem Tisch 19 bereitgestellt.

Vorzugsweise überwacht Gerät 1, welche Wäschestücke sich auf Tisch 19 befinden. Wird ein Wäschestück entfernt, wird der Status des Wäschestücks in der Datenbank 38 entsprechend nachgeführt.

Verschiedene der erwähnten Operationen werden im Folgenden nochmals genauer beschrieben:

### Zählen/Vereinzeln:

Sender/Empfänger 33 erlaubt, wie erwähnt, ein Zählen der vom Manipulator 3 aufgenommenen Wäschestücke aufgrund der Zahl der in der ergriffenen Wäsche vorhandenen elektronischen Etiketten.

Dies erlaubt u.a. eine Vereinzelung, indem der Manipulator zuerst ein oder mehrere Wäschestücke lokalisiert und aufnimmt. Wird festgestellt, dass die Zahl der ergriffenen Wäschestücke grösser als eins ist, wird die ergriffene Wäsche zurückgelegt und es wird ein neuer Versuch gestartet. Dies wird wiederholt, bis genau ein Wäschestück aufgenommen worden ist.

### Zusammenlegen von Wäsche:

Der Manipulator 3 kann zum Zusammenlegen von Wäsche ausgestaltet sein. Hierzu ist es von Vorteil, wenn am Manipulator 3 mindestens zwei weitgehend unabhängig voneinander bewegliche Greifvorrichtungen 10, z.B. an separaten Armen, vorgesehen sind, so dass das Wäschestück an unterschiedlichen Enden ergriffen werden kann.

Wichtig ist dabei, dass Gerät 1 die Orientierung des Wäschestücks kennt. Diese Information kann z.B. gewonnen werden, indem die in Datenbank 38 abgelegte Information zur Geometrie des Wäschestücks und zum Ort der Anordnung der Etikette am Wäschestück mit einer optischen Bilderkennung aufgrund der Signale der Kameras 32 und einer Ortung der Etikette über Sender/Empfänger 33 kombiniert wird. Je nach Art des Wäschestücks kann diese Arbeit einfach oder kompliziert sein. Denkbar ist es, dass Gerät 1 nur diejenigen Wäschestücke zusammenlegt, die eine einfache Geometrie besitzen, wie z.B. Handtücher oder Hosen, während Wäschestücke mit komplizierter Geometrie oder Wäschestücke, die sich nicht zum Zusammenlegen eignen, nicht zusammengelegt werden. Entsprechende Weisungen können in der Datenbank 38 abgespeichert sein.

### Bügeln:

Beim Bügeln ergeben sich ähnliche Probleme wie beim Zusammenlegen, indem die Orientierung des Wäschestücks bekannt sein muss und gegebenenfalls geändert werden sollte, bevor dieses in das Bügelgerät 18 eingeführt oder einer anderen automatischen Bügelvorrichtung zugeführt wird. Auch hierzu sind wiederum vorzugsweise mehrere unabhängig voneinander bewegliche Greifvorrichtungen vorgesehen, und die Orientierung des Wäschestücks kann, wie beim Zusammenlegen, aufgrund optischer Bilderkennung und Ortung der Etiketten unter Beizug der Daten aus der Datenbank 38 erfolgen.

Die Vorschriften zum Bügeln sind beispielsweise unter den oben erwähnten "Bügelparametern" in der Datenbank 38 abgespeichert. Beispielsweise kann für ein Wäschestück festgelegt werden, dass es gar nicht zu bügeln ist, oder dass nur Teile davon zu bügeln sind (z.B. für ein Wäschestück mit Rüschen kann festgehalten werden, dass die Rüschen nicht gebügelt werden sollen).

### Eingeben/Nachführen der Daten

Wie oben erwähnt, wird das Wäschestück vorzugsweise in der Datenbank 38 erfasst, sobald es mit einer elektronischen Etikette versehen wird. Gleichzeitig werden möglichst viele weitere Daten zum Wäschestück erfasst.

Die Daten werden sodann teilweise automatisch nachgeführt. Wie oben erwähnt können z.B. die erwähnten Einträge j) (Alter, Geschichte) und 1) (Status) automatisch von der Steuerung 30 nachgeführt werden. Andere Daten können jederzeit auch vom Benutzer nachgeführt bzw. geändert werden.

Gewisse Parameter können z.B. abhängig vom Alter geändert werden, und dies entweder manuell oder automatisch. Beispielsweise kann eine generelle Vorschrift bestehen, dass neue Buntwäsche bei tieferer Temperatur zu waschen ist als alte Buntwäsche (da neue Buntwäsche stärker zum Ausbluten von Farbe neigt).

Wie bereits erwähnt, kann mindestens ein Teil der Daten zu einem Wäschestück auch in der Etikette selbst gespeichert werden. Dies kann anstelle einer Speicherung in der zentralen Datenbank 38 des Geräts 1 oder zusätzlich zur Speicherung in der zentralen Datenbank 38 erfolgen. Mit anderen Worten können auch die Speicher der Etiketten als Datenbank für das Gerät 1 dienen. Der Begriff "Datenbank" ist somit breit zu verstehen und kann eine lokale, dem Gerät 1 physikalisch zugeordnete, zentrale Datenbank aber auch eine virtuelle, über die Speicher der Etiketten verteilte Datenbank bezeichnen.

## Patentansprüche

1. Haushaltgerät umfassend einen Manipulator (3) welcher dazu ausgestaltet ist, Wäschestücke einer Waschmaschine (14) oder einem Wäschetrockner (15) zuzuführen und/oder aus der Waschmaschine (14) oder dem Wäschetrockner (15) zu entnehmen,
**dadurch gekennzeichnet, dass** das Haushaltgerät ein Lesegerät (33) zum drahtlosen Auslesen von an den Wäschestücken angeordneten, per Funk auslesbaren Etiketten aufweist, und das Haushaltgerät dazu ausgestaltet ist, Wäsche aufgrund von mit dem Lesegerät (33) ausgelesenen Informationen zu behandeln,
wobei das Haushaltgerät dazu ausgestaltet ist, Wäsche von der Waschmaschine (14) in den Wäschetrockner (15) umzuladen
wobei der Manipulator (3) dazu ausgestaltet ist, Wäschestücke der Waschmaschine (14) und dem Wäschetrockner (15) zuzuführen und aus der Waschmaschine (14) und dem Wäschetrockner (15) zu entnehmen, und
wobei die Waschmaschine und der Wäschetrockner Türen (16, 17) aufweisen und das Haushaltgerät dazu ausgestaltet ist, die Türen (16, 17) zu öffnen und zu schliessen.

2. Haushaltgerät nach Anspruch 1, wobei es dazu ausgestaltet ist, Wäsche mit dem Manipulator (3) zu ergreifen und eine Zahl der ergriffenen Wäschestücke aufgrund der Zahl der in der ergriffenen Wäsche vorhandenen Etiketten zu bestimmen.

3. Haushaltgerät nach Anspruch 2, wobei es dazu ausgestaltet ist, die ergriffene Wäsche zurückzulegen, falls die Zahl der ergriffenen Wäschestücke grösser als eins ist.

4. Haushaltgerät nach einem der vorangehenden Ansprüche, wobei es ein Interface (36) zur Programmierung der Waschmaschine (14) oder des Wäschetrockners (15) aufweist, und wobei das Haushaltgerät dazu ausgestaltet ist, um aus Informationen, welche es aus den Etiketten ausliest, ein geeignetes Wasch- bzw. Trocknungsprogramm zu wählen und die Waschmaschine (14) oder den Wäschetrockner (15) entsprechend zu programmieren.

5. Haushaltgerät nach einem der vorangehenden Ansprüche, wobei es eine Datenbank (38) aufweist, in welcher die Wäschestücke verzeichnet sind.

6. Haushaltgerät nach einem der vorangehenden Ansprüche, wobei es eine Zuführstelle (20) zum Ablegen von zu waschender Wäsche aufweist, wobei das Haushaltgerät dazu ausgestaltet ist, alle Etiketten der Wäsche in der Zuführstelle auszulesen.

7. Haushaltgerät nach Anspruch 6, wobei es dazu ausgestaltet ist, aufgrund der ausgelesenen Etiketten festzulegen, mit welchen Waschparametern die Waschmaschine (14) zu betreiben ist.

8. Haushaltgerät nach Anspruch 5 und einem der Ansprüche 6 oder 7, wobei es dazu ausgestaltet ist, aufgrund von Angaben aus der Datenbank (38) zu entscheiden, welche Wäsche in der Zuführstelle (20) als nächste zu waschen ist.

9. Haushaltgerät nach einem der vorangehenden Ansprüche mit einer Bügelvorrichtung (18), wobei mit dem Manipulator (3) Wäsche der Bügelvorrichtung (18) zuführbar ist.

10. Haushaltgerät nach einem der vorangehenden Ansprüche, wobei der Manipulator (3) zum Zusammenlegen von Wäsche ausgestaltet ist.

11. Haushaltgerät nach einem der vorangehenden Ansprüche mit mindestens einer Kamera (32) und Bilderkennung zum Erkennen einer Orientierung eines vom Manipulator (3) ergriffenen Wäschestücks.

12. Haushaltgerät nach einem der vorangehenden Ansprüche, wobei das Lesegerät (33) zusätzlich als Schreibgerät zum Einschreiben von Informationen in die Etiketten ausgestaltet ist.

13. Kombination aus einem Haushaltgerät nach einem der vorangehenden Ansprüche und einem Satz von drahtlos auslesbaren Etiketten, welche vom Haushaltgerät auslesbar sind.

14. Kombination nach Anspruch 13, wobei im Haushaltgerät und/oder in den Etiketten Informationen abgespeichert sind, welche angeben, wo an einem Wäschestück eine Etikette jeweils angebracht ist.

15. Kombination nach einem der Ansprüche 13 oder 14, wobei im Haushaltgerät und/oder in den Etiketten Informationen abgespeichert sind, welche Behandlungsparameter für ein Wäschestück angeben, an welchem eine Etikette angebracht ist, und insbesondere wobei die Behandlungsparameter,mindestens eine Angabe ausgewählt aus der folgenden Gruppe umfassen: Waschtemperatur, Trocknungsbedingungen, Trocknungstemperatur, Schwingparameter, Bügelparameter, Zusammenlegparameter und Besitzer.

16. Kombination nach einem der Ansprüche 13 bis 15, wobei im Haushaltgerät und/oder in den Etiketten Informationen abgespeichert sind, welche angeben, was für eine Geometrie ein Wäschestück aufweist.

## Claims

1. Household appliance consisting of a manipulator (3) designed to place laundry items into a washing machine (14) or a washer-dryer (15) and / or remove them from the washing machine (14) or washer-dryer (15), **characterised in that**, the household appliance features a reading device (33) designed for wireless reading of readable labels on the washing items by radio and that the household appliance is designed to treat washing based on the information provided by the reading device (33), wherein the household appliance is designed to transfer washing from the washing machine (14) into the washer-dryer (15), wherein the manipulator (3) is designed to place laundry items into the washing machine (14) and the washer-dryer (15) and to remove them from the washing machine (14) and washer-dryer (15) and wherein the washing machine and washer-dryer feature doors (16, 17) and the household appliance is designed to open and close the doors (16, 17).

2. Household appliance according to claim 1, designed for washing to be taken by the manipulator (3) and to determine the number of washing items taken based on the number of labels available in the washing that has been taken.

3. Household appliance according to claim 2, designed to put washing to one side in case the number of washing items is greater than 1.

4. Household appliance according to any one of the preceding claims, featuring an interface (36) for programming of the washing machine (14) or the washer-dryer (15), and designed to select an appropriate washing or drying programme based on the information read off the labels and programmes the washing machine (14) or the washer-dryer (15) correspondingly.

5. Household appliance according to any one of the preceding claims, featuring a database (38) in which the washing items are entered.

6. Household appliance according to any one of the preceding claims, featuring a feeding point (20) for the storage of washing to be washed, wherein the household appliance is designed to read all labels on washing in the feeding point.

7. Household appliance according to claim 6, designed to determine which washing parameters the washing machine (14) is to be operated with based on the labels read.

8. Household appliance according to claim 5 and one of claims 6 or 7, designed to decide, based on details in the database (38), as to which washing in the feeding point (20) is the next to be washed.

9. Household appliance according to any one of the preceding claims with an ironing surface, (18), wherein washing can be brought to the ironing surface (18) by the manipulator (3).

10. Household appliance according to any one of the preceding claims, wherein the manipulator (3) is designed for the folding of washing.

11. Household appliance according to any one of the preceding claims with at least one camera (32) and image recognition in order to identify the orientation of an item of washing taken by the manipulator (3).

12. Household appliance according to any one of the preceding claims, wherein the reading device (33) is additionally designed as a writing instrument for the entering of information on to the labels.

13. Combination from a household appliance according to any one of the preceding claims and a set of wireless readable labels which can be read by the household appliance.

14. Combination according to claim 13, wherein information is stored in the household appliance and/or on the labels specifying where a label is attached on an item of washing.

15. Combination according to claims 13 and 14, wherein information is stored in the household appliance and/or on the labels specifying the treatment of parameters for an item of washing on to which a label is attached and particularly, wherein the treatment parameters comprise of at least one detail selected from the following group: washing temperature, drying conditions, drying temperature, vibration parameters, ironing parameters, folding parameters and owner.

16. Combination according to claims 13 to 15, wherein information specifying the geometry of the washing item is stored in the household appliance and/or on the labels.

## Revendications

1. Appareil ménager comprenant un manipulateur (3) qui est configuré de sorte à amener du linge à un lave-linge (14) ou à un sèche-linge (15) et/ou à le retirer du lave-linge (14) ou du sèche-linge (15),
**caractérisé en ce que** l'appareil ménager présente un lecteur (33) pour la lecture sans fil d'étiquettes lisibles par radio, disposées sur le linge, et **en ce que** l'appareil ménager est configuré de sorte à traiter le linge selon les informations lues par le lecteur (33),
**en ce que** l'appareil ménager est configuré de sorte à transférer du linge du lave-linge (14) au sèche-linge (15),
**en ce que** le manipulateur (3) est configuré de sorte à amener du linge au lave-linge (14) et au sèche-linge (15) et à le retirer du lave-linge (14) et du sèche-linge (15), et
**en ce que** le lave-linge et le sèche-linge présentent des portes (16, 17) et l'appareil ménager est configuré de sorte à ouvrir et fermer les portes (16, 17).

2. Appareil ménager selon la revendication 1, **caractérisé en ce qu'**il est configuré de sorte à saisir du linge avec le manipulateur (3) et à déterminer un nombre de pièces de linge saisies en fonction du nombre d'étiquettes présentes dans le linge saisi.

3. Appareil ménager selon la revendication 2, **caractérisé en ce qu'**il est configuré de sorte à replacer le linge saisi si le nombre de pièces de linge saisies est supérieur à un.

4. Appareil ménager selon l'une quelconque des revendications précédentes, en ce qu'il présente une interface (36) pour la programmation du lave-linge (14) ou du sèche-linge (15), et en ce que l'appareil ménager est configuré de sorte à choisir à partir d'informations qu'il lit sur les étiquettes, un programme de lavage ou de séchage approprié et à programmer en conséquence le lave-linge (14) ou le sèche-linge (15).

5. Appareil ménager selon l'une quelconque des revendications précédentes, sachant qu'il présente une base de données (38), dans laquelle les pièces de linge sont enregistrées.

6. Appareil ménager selon l'une quelconque des revendications précédentes, en ce qu'il présente un point d'amenée (20) pour la dépose du linge à laver, en ce que l'appareil ménager est configuré de sorte à lire toutes les étiquettes du linge placé au point d'amenée.

7. Appareil ménager selon la revendication 6, sachant qu'il est configuré de sorte à déterminer selon les étiquettes lues, les paramètres de lavage, avec lesquels le lave-linge (14) doit fonctionner.

8. Appareil ménager selon la revendication 5 et l'une quelconque des revendications 6 ou 7, en ce qu'il est configuré de sorte à décider en raison des indications de la base de données (38), quel linge dans le point d'amenée (20) doit ensuite être lavé.

9. Appareil ménager selon l'une quelconque des revendications précédentes avec un dispositif de repassage (18), en ce que du linge peut être amené avec le manipulateur (3) au dispositif de repassage (18).

10. Appareil ménager selon l'une quelconque des revendications précédentes, sachant que le manipulateur (3) est configuré de sorte à plier soigneusement le linge.

11. Appareil ménager selon l'une quelconque des revendications précédentes ayant au moins une caméra (32) et un moyen d'analyse d'image pour l'analyse d'une orientation d'un linge saisie par le manipulateur (3).

12. Appareil ménager selon l'une quelconque des revendications précédentes, sachant que le lecteur (33) est en outre configuré comme un appareil enregistreur destiné à inscrire des informations contenues dans les étiquettes.

13. Combinaison d'un appareil ménager selon l'une quelconque des revendications précédentes et d'un jeu d'étiquettes lisibles sans fil qui peuvent être lues par l'appareil ménager.

14. Combinaison selon la revendication 13, en ce que des informations qui indiquent où une étiquette est respectivement fixée sur une pièce de linge, sont enregistrées dans l'appareil ménager et/ou dans les étiquettes.

15. Combinaison selon l'une quelconque des revendications 13 ou 14, en ce que des informations qui indiquent des paramètres de traitement pour une pièce de linge, sur laquelle est fixée une étiquette, sont enregistrées dans l'appareil ménager et/ou dans les étiquettes, et en ce que les paramètres de traitement comportent au moins une indication sélectionnée dans le groupe suivant : température de lavage, conditions de séchage, température de séchage, paramètres d'oscillation, paramètres de repassage, paramètre de pliage et détenteur.

16. Combinaison selon l'une quelconque des revendications 13 à 15, sachant que des informations qui indiquent la géométrie que présente une pièce de linge, sont enregistrées dans l'appareil ménager et/ou dans les étiquettes.
